# EUROPÄISCHE PATENTSCHRIFT

(11) **EP 1 615 790 B1**
(45) Veröffentlichungstag und Bekanntmachung des Hinweises auf die Patenterteilung: **02.08.2006**
(21) Anmeldenummer: 04728322.1
(22) Anmeldetag: 20.04.2004
(51) Int. Cl.: B60H 1/00

(54) **WÄRMEÜBERTRAGUNGSEINRICHTUNG FÜR GROSSVOLUMIGE FAHRZEUGINNENRÄUME**
HEAT EXCHANGING DEVICE FOR LARGE-VOLUME VEHICLE PASSENGER COMPARTMENTS
DISPOSITIF DE TRANSFERT DE CHALEUR POUR HABITACLES DE GROS VOLUME

(30) Priorität: 22.04.2003 DE 10318174
(43) Veröffentlichungstag der Anmeldung: 18.01.2006
(73) Patentinhaber: Webasto Bus GmbH, 82131 Stockdorf (DE)
(72) Erfinder: SCHEID, Helmut, 86920 Denklingen (DE)
(74) Vertreter: Schumacher & Willsau
(86) Internationale Anmeldenummer: PCT/DE2004/000831
(87) Internationale Veröffentlichungsnummer: WO 2004/094171

(56) Entgegenhaltungen:
- WO-A-01/89867
- DE-A- 2 711 816
- DE-C- 19 702 643
- DE-U- 20 012 745

## Beschreibung

Die Erfindung betrifft eine Wärmeübertragungseinrichtung für großvolumige Fahrzeuginnenräume, mit einem mit Luftkanälen ausgestatteten Gehäuse, wobei das Gehäuse eine Längsabmessung hat, die wesentlich größer ist als seine Querabmessungen, mindestens einem Wärmeträgerkanal zum Führen eines flüssigen Wärmeträgers, der sich im Wesentlichen in Längsrichtung des Gehäuses erstreckt, und mindestens einem Gebläse zum Ansaugen, zum Ausblasen und zum Fördern von Luft durch das Gehäuse.

Die Erfindung betrifft weiterhin ein Verfahren zum Betreiben einer Wärmeübertragurigseinrichtung.

Wärmeübertragungseinrichtungen für großvolumige Fahrzeuginnenräume kommen insbesondere in Bussen zum Einsatz, um dort für die Fahrgäste ein behagliches Klima einstellen zu können.

Beispielsweise kennt man Wärmeübertragungseinrichtungen ohne Gebläse, die auch als Konvektoren bezeichnet werden. Diese dienen zum Heizen von Fahrzeuginnenräumen, wobei Heizwasser führende Rohre vorgesehen sind, die zur Vergrößerung der wärmeabgebenden Oberfläche mit Lamellen versehen sind. Nachteilig an derartigen Wärmeübertragungseinrichtungen ohne Gebläse ist jedoch, dass nur eine vergleichsweise geringe Heizleistung zur Verfügung gestellt werden kann und dass aufgrund des ausschließlich auf Konvektion beruhenden Wärmetransports nur eine Wärmeabgabe nach oben in Richtung der freiströmenden Luft erfolgen kann. Folglich werden kalte Bodenbereiche nicht beheizt.

Im Gegensatz zu den Wärmeübertragern ohne Gebläse sind auch gebläseunterstützte Wärmeübertragungseinrichtungen bekannt, wie zum Beispiel aus der DE 197 02 643 C1. Diese Einrichtung ist aus einer Vielzahl von Segmenten aufgebaut. Die wesentlichen Elemente der Einrichtung sind ein von einem flüssigen Wärmeträger durchströmter Wärmetauscher, ein zur Luftführung dienendes Gehäuse und wenigstens ein Gebläse. Vorzugsweise sind bei der Vorrichtung des Standes der Technik eine Vielzahl hintereinander angeordnete Segmente vorgesehen, zwischen denen jeweils ein Gebläse angeordnet ist, wobei jedes Segment durch wenigstens ein Luftleitblech in zwei getrennte durchströmbare Bereiche aufgeteilt ist. Diese an sich mit hoher Leistung und auch zur Beheizung des Bodenbereichs betreibbare Vorrichtung ist mit Nachteilen behaftet. Insbesondere ist die Vorrichtung gemäß DE 197 02 643 C1 in ihrer Herstellung kostenintensiv, weiterhin großvolumig, und sie hat ferner eine hohe Masse. Weiterhin ist eine Luftaustrittsmöglichkeit nur zum Boden hin realisiert. Es besteht ferner nur eine geringe beziehungsweise mit hohen Kosten in Verbindung stehende Flexibilität im Hinblick auf den Einbau der Vorrichtung in unterschiedliche Fahrzeugtypen. Dies hängt damit zusammen, dass das aus Reinigungsgründen zweiteilig ausgebildete Gehäuse, der Wärmetauscher und die Leitbleche in speziell für die Anwendung vorgesehenen Längen hergestellt oder aus Grundlängen durch Beschnitt und Zusammenfügen erzeugt werden müssen. Da auch die Gehäusedeckel, welche zur Luftzuführung dienen, in ihrer Länge angepasst werden müssen, ist eine Nachbearbeitung der Öffnungen der im Allgemeinen durch ein Strangpressverfahren hergestellten Gehäusedeckel erforderlich. Aufgrund der vertikalen Aufeinanderfolge der verschiedenen Komponenten wird in dieser Richtung viel Bauraum benötigt. Dies ist auch der Grund für die vergleichsweise hohe Masse der Vorrichtung des Standes der Technik.

Der Erfindung liegt die Aufgabe zugrunde, eine Wärmeübertragungseinrichtung für großvolumige Fahrzeuge und ein Verfahren zum Betreiben derselben zur Verfügung zu stellen, so dass die Nachteile des Standes der Technik überwunden werden und insbesondere eine kostengünstige, einfach zu fertigende Einrichtung mit hoher Funktionalität zur Verfügung gestellt wird.

Diese Aufgabe wird mit den Merkmalen der unabhängigen Ansprüche gelöst.

Besonders bevorzugte Ausführungsformen der Erfindung sind in den abhängigen Ansprüche angegeben.

Die Erfindung baut auf der gattungsgemäßen Wärmeübertragungseinrichtung dadurch auf, dass der Wärmeträgerkanal in das Gehäuse integriert ist, dass mindestens ein Lufteintrittskanal vorgesehen ist, dass mindestens ein Luftaustrittskanal vorgesehen ist, dass mindestens ein erster Wärmeübertragungsluftkanal vorgesehen ist, dass mindestens ein zweiter Wärmeübertragungsluftkanal vorgesehen ist, dass der mindestens eine Lufteintrittskanal und der mindestens eine erste Wärmeübertragungsluftkanal über mindestens einen ersten Luftdurchtritt miteinander verbunden sind, dass der mindestens eine Luftaustrittskanal und der mindestens eine zweite Wärmeübertragungsluftkanal über mindestens einen zweiten Luftdurchtritt miteinander verbunden sind, dass das mindestens eine Gebläse und der mindestens eine erste Luftdurchtritt an entgegengesetzten Enden des ersten Wärmeübertragungsluftkanals angeordnet sind und dass der mindestens eine zweite Luftdurchtritt in der Nähe des mindestens einen Gebläses, jedoch ohne direkte Verbindung zu diesem angeordnet ist. Auf der Grundlage einer derartigen Wärmeübertragungseinrichtung ist es möglich, die Luft über weite Bereiche in Längsrichtung der Wärmeübertragungseinrichtung zu führen, so dass der Wärmeübergang zwischen Luft und Wärmeträger verbessert wird. Durch die Integration des Wärmeträgerkanals in das Gehäuse der Wärmeübertragungseinrichtung ist kein separater Wärmeträger mit entsprechenden Haltevorrichtung mehr erforderlich. Dies verringert den vertikalen Bauraum der Wärmeübertragungseinrichtung und das Gesamtgewicht der Anlage.

Die erfindungsgemäße Wärmeübertragungseinrichtung ist insbesondere dadurch vorteilhaft weitergebildet, dass das Gehäuse eine obere Gehäusewand und eine untere Gehäusewand aufweist, dass der Wärmeträgerkanal in die obere Gehäusewand und insbesondere auch in die untere Gehäusewand integriert ist und dass die Wärmeübertragungsluftkanäle zwischen dem Lufteintrittskanal beziehungsweise dem Luftaustrittskanal und der oberen Gehäusewand beziehungsweise der unteren Gehäusewand angeordnet sind. Das u-förmig oder kreissegmentförmig ausgebildete Gehäuse hat somit an seiner oberen- und vorzugsweise auch an seiner unteren Begrenzung eine Wärmeübertragungsfläche. Durch diese Flächen sowie die im Gehäuse integrierten Kanäle zur Luftzirkulation ist eine optimale Nutzung der Wärmetauscheroberfläche im Verhältnis zur Größe gegeben.

Weiterhin ist es besonders bevorzugt, dass die Wärmeübertragungseinrichtung mehrere Segmente aufweist und dass jedes Segment einen Lufteintrittskanal, einen Luftaustrittskanal, zwei Wärmeübertragungsluftkanäle, zwei Abschnitte des Wärmeträgerkanals und ein Gebläse aufweist. Das Gehäuse besteht somit aus in ihrer Struktur identischen Bauelementen, was die Fertigung des Gehäuses stark vereinfacht, insbesondere im Rahmen einer Endlosfertigung

In diesem Zusammenhang und im Zusammenhang mit der Wärmeübertragungsfunktion der erfindungsgemäßen Einrichtung ist es besonders nützlich, dass zwischen den Wärmeübertragungsluftkanälen und dem Wärmeträgerkanal Lamellen angeordnet sind. Diese Lamellen beziehungsweise Rippen dienen der Erhöhung der wärmeabgebenden Fläche, und sie sind bei einer Fertigung durch Entlosstrangpressen in der Regel werkzeugfallend ohne Nachbearbeitung direkt in das Gehäuse integrierbar. Zur Erhöhung der Wärmeübertragungsfunktion nach außen in die Umgebungsluft kann ebenfalls vorgesehen sein, dass auch nach außen Rippen zur Vergrößerung der wärmeübertragenden Fläche am Gehäuse vorgesehen sind.

Weiterhin kann es besonders nützlich sein, dass das Gehäuse eine seitliche Gehäusewand aufweist, dass die der seitlichen Gehäusewand gegenüberliegende Seite des Gehäuses mit einer Deckeleinrichtung versehen ist, dass die Deckeleinrichtung in den Lufteintrittskanal führende Lufteintrittsöffnungen aufweist und dass die Deckeleinrichtung aus dem Luftaustrittskanal führende Luftaustrittsöffnungen aufweist. Eine solche Deckeleinrichtung, die gleichzeitig als Luftumlenkungseinheit dient, kann wiederum in werkzeugfallender Fertigungsweise kostengünstig hergestellt werden, beispielsweise durch Kunststoffspritzguss. Durch die Lufteintrittsöffnungen und die Luftaustrittsöffnungen sind zwei getrennt durchströmte Bereiche vorhanden. Vorzugsweise ist die Deckeleinrichtung so ausgeführt, dass beim Öffnen zu Wartungszwecken die Gebläse mit entnommen werden können, wodurch eine optimale Zugänglichkeit zum Gebläsewechsel und zum Reinigen des Innenraums gegeben ist. Insbesondere ist es nützlich, dass die Deckeleinrichtungen ohne Schraubverbindungen am Gehäuse befestigt sind, beispielsweise an das Gehäuse geclipst sind.

Die erfindungsgemäße Wärmeübertragungseinrichtung ist insbesondere dadurch vorteilhaft weitergebildet, dass die seitliche Gehäusewand eine Wärmtauscherfunktion hat, so dass außerhalb des Gehäuses an der seitlichen Gehäusewand vorbeiströmende Luft erwärmt beziehungsweise gekühlt und nach oben ausgeblasen werden kann. Neben der Wärmetauscherfunktion der oberen Gehäusewand und der unteren Gehäusewand kann also auch am stehenden Schenkel des im Allgemeinen u-förmigen Gehäuses eine Wärmetauscherfunktion bereitgestellt werden. Wird diese seitliche Gehäusewand parallel zu einer Fahrzeugwand montiert, so kann durch den sich hierdurch ausbildenden Kanal Luft strömen und sich dort erwärmen. Diese kann vorher bereits unter der unteren Gehäusewand hindurchströmen und dort ebenfalls erwärmt worden sein.

Weiterhin ist besonders zu bevorzugen, dass der Lufteintrittskanal oberhalb des Luftaustrittskanals angeordnet ist. Auf diese Weise lässt sich ein Ausströmen von erwärmter Luft in den Bodenbereich besonders leicht realisieren.

Nützlicherweise ist ferner vorgesehen, dass in dem Lufteintrittskanal Luftfiltermittel vorgesehen sind. Die erfindungsgemäße Vorrichtung arbeitet im Hinblick auf Schmutzablagerungen ohnehin in zufriedenstellender Weise, da diese an den kühlsten Stellen der Einrichtung anfallen. Hierdurch wird eine Geruchsbelästigung reduziert. In diesem Zusammenhang ist zu erwähnen, dass sich durch die Integration des Wärmeträgerkanals in das Gehäuse und der dadurch deutlich größeren Wärmeübertragungsfläche geringere Oberflächentemperaturen einstellen, so dass die Geruchsbelästigung durch erwärmte Ablagerungen an den Wärmeübertragungsflächen ohnehin geringer wird. Aufgrund der Ausführung der erfindungsgemäßen Vorrichtung mit einer abnehmbaren Deckeleinrichtung, kann eine Reinigung in vorteilhafter Weise erfolgen. Durch die zusätzliche Anordnung von Luftfiltermitteln, beispielsweise in Form von sich durch die Luftströmung statisch aufladenden Filterborsten, kann ein gezieltes Ansammeln von Schmutzpartikeln an den am besten zugänglichen und den kühlsten Stellen der Vorrichtung gefördert werden.

Die Erfindung bezieht sich weiterhin auf ein Verfahren zum Betreiben einer erfindungsgemäßen Wärmeübertragungseinrichtung, bei dem zur Beeinflussung der Wärme- beziehungsweise Kälteleistung der Wärmeübertragungseinrichtuhg die Gebläsedrehzahl gesteuert beziehungsweise geregelt wird. Das Gebläse kann beispielsweise für einen mehrstufigen Betrieb ausgelegt werden oder zum stufenlosen Betrieb, beispielsweise durch Pulsweitenmodulation, konstruiert sein.

Die Erfindung ist ferner in Form eines Verfahrens weitergebildet, bei dem zur Beeinflussung der Wärme- beziehungsweise Kälteleistung der Wärmeübertragungseinrichtung die Menge des zirkulierenden Wärmeträgers gesteuert beziehungsweise geregelt wird.

Es kann weiterhin ein Verfahren vorgesehen sein, bei dem zur Beeinflussung der Wärme- beziehungsweise Kälteleistung der Wärmeübertragungseinrichtung die Temperatur des zirkulierenden Wärmeträgers gesteuert beziehungsweise geregelt wird.

Der Erfindung liegt die Erkenntnis zugrunde, dass durch Integration des Wärmeträgerkanals in das Gehäuse einer Wärmeübertragungseinrichtung und durch eine geeignete Luftumlenkung innerhalb des Gehäuses sowohl eine Verbesserung der Wärmeübertragungsleistung als auch eine Reduzierung der Kosten, des benötigten Bauraums und der Masse der Einrichtung ermöglicht werden. In der erfindungsgemäßen Einrichtung erfolgt eine Integration der Übertragung von Wärme durch Strahlung, durch freie Konvektion über die äußere Oberfläche der Einrichtung und durch erzwungene Konvektion im Inneren der Wärmeübertragungseinrichtung. Es ist möglich, die Einrichtung ohne Gebläse zu betreiben, wobei die Wärmeübertragung durch Strahlung und Konvektion an der Oberfläche durch die im Inneren auch ohne Gebläse entstehende Luftströmung erfolgt. Bei der vorgeschlagenen Konstruktion ist bis auf das ohnehin erforderliche Ablängen der Vorrichtungen keine weitere mechanische Bearbeitung des Gehäuses zur Anpassung an unterschiedliche Fahrzeugtypen erforderlich, was bei den üblichen Gehäuselängen von 6000 mm in Omnibussen enorme Kosten einspart. Zur Erzeugung der Längenvarianten muss nur noch das Gehäuse und nicht noch zusätzlich der im Rahmen des Standes der Technik separat vorgesehene Wärmetauscher abgelängt oder aus Grundvarianten zusammengefügt werden. Es ist weiterhin möglich, verschiedene Gehäuseteile einfach durch Raststifte zu verbinden und hierdurch abfallfrei Längenvarianten zu erzeugen. Weitere besondere Vorteile der Erfindung stehen mit einer geringeren Geruchsbelastung durch eine vergrößerte Wärmeübertragungsoberfläche und dadurch eine niedrigere Oberflächentemperatur in Verbindung. Aufgrund der speziellen Luftführung wird eine optimale Staubablagerung und eine bequeme Reinigungsmöglichkeit ermöglicht. Die Integration von schmutzaufnehmenden Einrichtungen ist in einfacher Weise möglich. Die komplette Entnahme der schmutzaufnehmenden Teile zu Reinigungszwecken kann ebenfalls bei optimaler Zugänglichkeit realisiert werden. Diese optimale Zugänglichkeit bezieht sich auch auf die Wartung und ein eventuell erforderliches Auswechseln eines Gebläses.

Die Erfindung wird nun mit Bezug auf die begleitenden Zeichnungen anhand bevorzugter Ausführungsformen beispielhaft erläutert.

Dabei zeigt:
- Figur 1: eine schematische Darstellung einer erfindungsgemäßen Wärmeübertragungseinrichtung im Längsschnitt mit mehreren Segmenten;
- Figur 2: eine schematische Darstellung eines einzelnen Segmentes einer erfindungsgemäßen Wärmeübertragungsvorrichtung mit angrenzenden Segmenten im Längsschnitt; und
- Figur 3: eine schematische Darstellung einer erfindungsgemäßen Wärmeübertragungseinrichtung in eingebautem Zustand in einem Fahrzeug im Querschnitt.

Bei der nachfolgenden Beschreibung der Zeichnungen bezeichnen gleiche Bezugszeichen gleiche oder vergleichbare Komponenten.

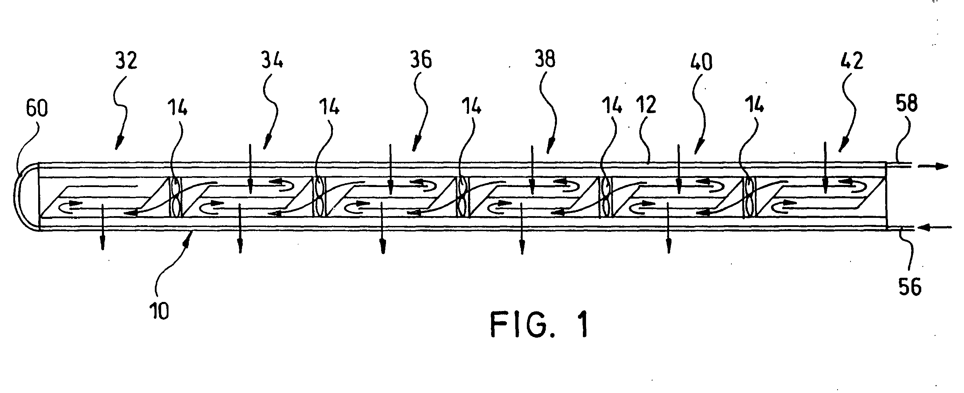

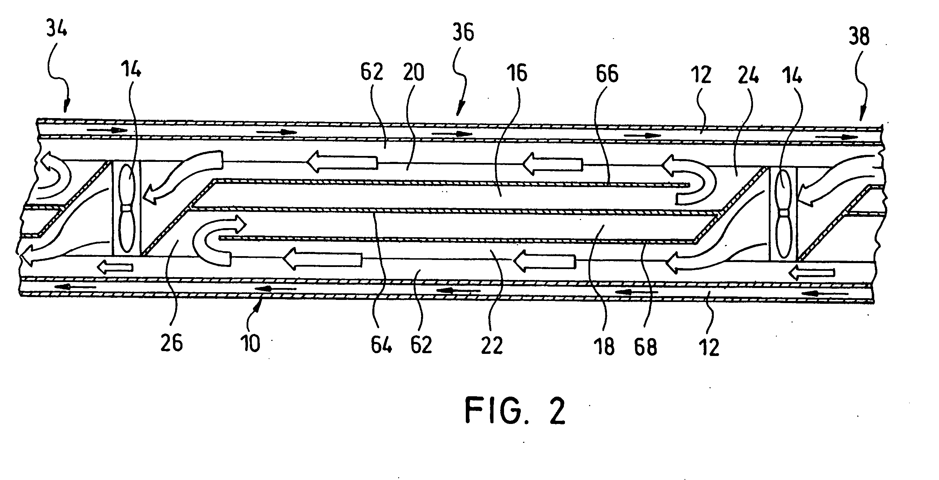

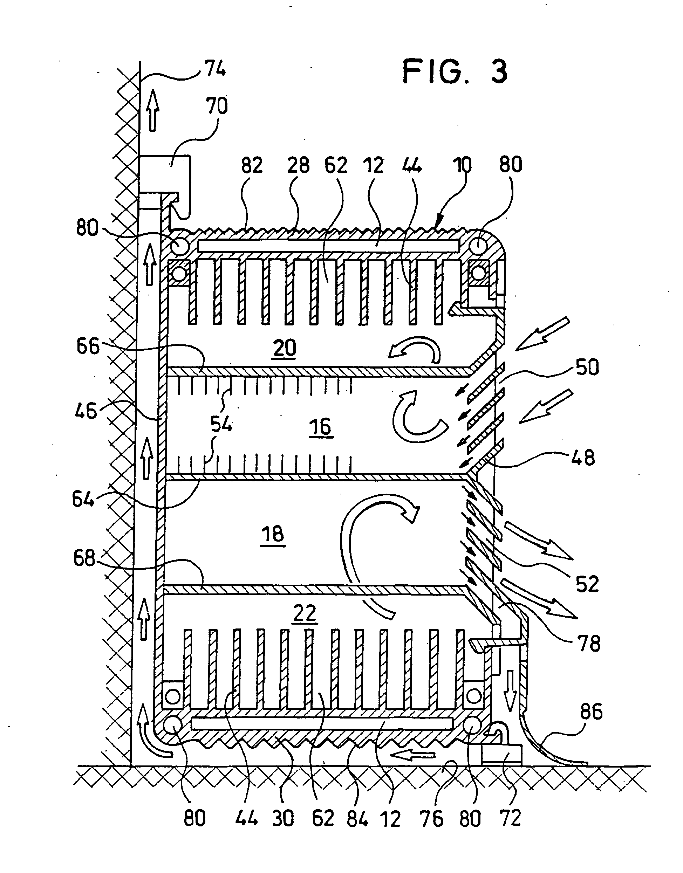

Figur 1 zeigt eine schematische Darstellung einer erfindungsgemäßen Wärmeübertragungseinrichtung im Längsschnitt mit mehreren Segmenten 32, 34, 36, 38, 40, 42. Figur 2 zeigt eine schematische Darstellung eines einzelnen Segmentes 36 einer erfindungsgemäßen Wärmeübertragungsvorrichtung mit angrenzenden Segmenten 34, 38 im Längsschnitt. Die erfindungsgemäße Wärmeübertragungseinrichtung umfasst ein Gehäuse 10, das mehrere Segmente 32, 34, 36, 38, 40, 42 aufweist. Die Segmente 32, 34, 36, 38, 40, 42 sind im Wesentlichen identisch aufgebaut. In Figur 2 ist ein Segment 36 stellvertretend dargestellt. In der oberen Gehäusewand 28 und in der unteren Gehäusewand 30 ist ein Wärmeträgerkanal 12 mit einem Wärmeträgereinlass 56 und einem Wärmeträgerauslass 58 vorgesehen. Der Wärmeträgerkanal 12 ist in das Gehäuse 10 integriert. Zur Verbindung des in der unteren Gehäusewand 30 und des in der oberen Gehäusewand 28 vorgesehenen Wärmeträgerkanals 12 ist eine Wärmeträgerumlenkung 60 vorgesehen. Ausgehend von dem Wärmeträgerkanal, der in der oberen Gehäusewand 28 angeordnet ist, folgen nach unten an den Wärmeträgerkanal 12 anschließend ein Lamellenbereich 62 mit in den Figuren 1 und 2 nicht dargestellten Lamellen (siehe Figur 3, Bezugszeichen 44), ein Wärmeübertragungsluftkanal 20, ein Lufteintrittskanal 16, ein Luftaustrittskanal 18, ein Wärmeübertragungsluftkanal 22 und wiederum ein Lamellenbereich 62, woran sich der in der unteren Gehäusewand 30 angeordnete Wärmeträgerkartal 12 anschließt. Die Lamellenbereiche 62 und die Wärmeübertragungsluftkanäle 20, 22 sind dabei lufttechnisch miteinander gekoppelt. Zwischen dem Lufteintrittskanal 16 und dem Luftaustrittskanal 18 besteht keine direkte Verbindung, was durch ein zentrales Luftleitelement 64 sichergestellt ist. Der Lufteintrittskanal 16 ist von dem oberen Wärmeübertragungsluftkanal 20 nahezu vollständig durch ein oberes Luftleitelement 66 getrennt. Es ist allerdings ein Luftdurchtritt 24 vorgesehen, so dass Luft aus dem Lufteintrittskanal 16 in den Wärmeübertragungsluftkanal 20 überströmen kann, um dann in Richtung auf das dem Luftdurchtritt 24 abgewandte Gebläse 14 strömen zu können. Als Gebläse 14 werden vorzugsweise die in großer Stückzahl produzierten im Stand der Technik gut bekannten Geräteaxiallüfter verwendet. Diese können zur Verbesserung der Lebensdauer auch in EC-Bauweise ausgeführt sein. Ebenso ist ein unteres Luftleitelement 68 vorgesehen, das den Luftaustrittskanal 18 nahezu vollständig von dem Wärmeübertragungsluftkanal 22 trennt. Es ist jedoch ein Luftdurchtritt 26 vorgesehen, so dass Luft von dem Wärmeübertragungskanal 22 in den Luftaustrittskanal 18 überströmen kann.

Figur 3 zeigt eine schematische Darstellung einer erfindungsgemäßen Wärmeübertragungseinrichtung in eingebautem Zustand in einem Fahrzeug im Querschnitt. Das Gehäuse 10 ist mit Befestigungsmitteln 70, 72 an die Fahrzeugseitenwand 74 und den Fahrzeugboden 76 eines Fahrzeugs montiert. Die obere Gehäusewand 28 und die untere Gehäusewand 30 sind erkennbar mit Rippen 82, 84 zur verbesserten Wärmeübertragung mittels Konvektion und Strahlung nach außen ausgestattet. In der oberen Gehäusewand 28 und der unteren Gehäusewand 30 ist der Wärmeträgerkanal 12 zu erkennen der im Betrieb beispielsweise mit einem Gemisch aus Wasser und Glysantin® gefüllt sein kann. An die obere Gehäusewand 28 und an die untere Gehäusewand 30 schließt sich jeweils ein Lamellenbereich 62 mit Lamellen 44 an. Die Lamellenbereiche 62 sind lufttechnisch mit daran anschließenden Wärmeübertragungsluftkanälen 20, 22 verbunden. Ausgehend von dem oberen Wärmeübertragungsluftkanal 20 folgt nach unten fortschreitend zunächst ein oberes Luftleitelement 66, das den oberen Wärmeübertragungsluftkanal 20 von dem Lufteintrittskanal 16 abgrenzt: Ein Luftübertritt zwischen dem Lufteintrittskanal 16 und dem Wärmeübertragungsluftkanal 20 ist dennoch an einem durch die Pfeile angedeuteten in Figur 3 nicht gezeigten Luftdurchtritt (siehe Figur 2, Bezugszeichen 24) möglich. Ebenso schließt sich an den unteren Wärmeübertragungsluftkanal 22 ein unteres Luftleitelement 68 an, das den Wärmeübertragungsluftkanal 22 gegen den Luftaustrittsbereich 18 abgrenzt. Auch hier ist ein Übergang von Luft von dem Wärmeübertragungsluftkanal 22 in den Luftaustrittskanal 18 möglich. Dies ist wiederum durch Pfeile angedeutet, wobei der Luftdurchtritt in Figur 3 nicht dargestellt ist (siehe Figur 2, Bezugszeichen 26). Der Lufteintrittskanal und der Luftaustrittskanal 16 sind durch ein zentrales Luftleitelement 64 voneinander getrennt. Weiterhin ist eine Deckeleinrichtung 48 vorgesehen, die Lufteintrittsöffnungen 50 und Luftaustrittsöffnungen 52 aufweist. Die Deckeleinrichtung 48 ist weiterhin mit einem Luftabzweig 78 ausgestattet, über den Luft aus dem Luftaustrittsbereich 18 in den Bereich zwischen der unteren Gehäusewand 30 und den Fahrzeugboden 76 gelangen kann. Dort kann die Luft im Heizbetrieb erwärmt werden, nachfolgend in den Zwischenraum zwischen der seitlichen Gehäusewand 46 und der Fahrzeugseitenwand 74 gelangen, wo sie zusätzlich erwärmt wird, um schließlich in Form eines erwärmten Luftstroms an der Oberseite zwischen dem Gehäuse 10 und der Fahrzeugseitenwand 74 auszutreten.

Der Luftabzweig 78 ist mittels einer Bodenabdichtung 86 gegen das Ausströmen der abgezweigten Luft gesichert. An dem Gehäuse 10 können weiterhin Kanäle 80 für Fügestifte vorgesehen sein, um so mehrere Gehäuse 10 miteinander zu verbinden. In dem Lufteintrittsbereich 16 sind weiterhin sowohl am oberen Luftleitelement 76 als auch an dem zentralen Luftleitelement 64 Luftfilterborsten 54 vorgesehen, die der Reinigung der durch die Lufteintrittsöffnungen 50 eintretenden Luft dienen.

Wie anhand der Figuren 1, 2 und 3 sowie der zugehörigen Beschreibung deutlich geworden ist, ist die erfindungsgemäße Wärmeübertragungseinrichtung in zwei Hauptbereiche durch das zentrale Luftleitblechelement 64 getrennt, wobei sich diese Bereiche nahezu über die gesamte Länge eines beispielhaft betrachteten Segments 36 erstrecken.

Die erfindungsgemäße Wärmeübertragungseinrichtung arbeitet wie folgt. Betrachtet man beispielhaft das Segment 36, so wird in dieses Segment 34 durch die Lufteintrittsöffnungen 50 Luft angesaugt. Aufgrund der Anordnung des Luftdurchtritts 24 an einer von dem Gebläse 14 abgewandten Position, strömt die zugeführte Luft nach Durchtritt durch den Luftdurchtritt 24 über eine große Strecke an dem Wärmeträgerkanal 12 vorbei, so dass eine große Wärmemenge übergehen kann. Dies wird noch durch die Lamellen 44 unterstützt. Die Luft strömt nachfolgend, angesaugt durch das Gebläse 14, durch das Gebläse 14 hindurch, um dann in den unteren Wärmeübertragungsluftkanal 20 des benachbarten Segments 34 zu gelangen. Da dieses Segment 34 im Allgemeinen baugleich mit dem Segment 36 ausgestaltet ist, kann zur Beschreibung der dort stattfindenden Abläufe wiederum auf das Segment 36 Bezug genommen werden. Die Luft strömt über eine große Strecke durch den unteren Wärmeübertragungsluftkanal 20 an dem Wärmeträgerkanal 12 vorbei, um dann durch den Luftdurchtritt 26 in den Luftaustrittskanal 18 überzuströmen. Von dort kann die Luft durch die Luftaustrittsöffnungen 52 ausströmen beziehungsweise im Falle der Ausnutzung der Konvektion am Fahrzeugboden 76 und der Fahrzeugseitenwand 74 teilweise in diese Bereiche einströmen. Im Allgemeinen erstrecken sich die Lufteintrittsöffnungen über die gesamte Länge des Segments 36, wobei die angesaugte Luft eine möglichst niedrige Ansauggeschwindigkeit aufweist, wodurch niedrige Luftverluste, ein niedriger Geräuschepegel und eine geringe Staubansaugung zu verzeichnen sind. Nach dem Überströmen der Luft aus dem Lufteintrittskanal 16 in den darüber liegenden Wärmeübertragungsluftkanal 20 strömt die Luft mit niedrigster Geschwindigkeit bei geringem Druckabfall über nahezu die volle Länge der oberen Innenfläche des Wärmeträgerkanals 12 zu dem Gebläse 14. Nachdem die Luft dann den unteren Wärmeübertragungsluftkanal 22 durchströmt hat und durch den Luftdurchtritt 26 in den Lufteintrittskanal 18 geströmt ist, kann die Luft dann gegebenenfalls gerichtet und gegebenenfalls über einen Düseneffekt über nahezu die gesamte Länge des Segments 36 in Richtung Fahrzeugboden 76 ausgeblasen werden.

Es ist zu betonen, dass eine Wärmeübertragung durch Wärmestrahlung und natürliche Konvektion an der Außenfläche sowie aus einer durch den Temperaturunterschied entstehenden natürlichen Luftströmung auch ohne Betrieb des Gebläses erfolgen kann. Diese kann durch die im Gehäuse zirkulierende Wassermenge gezielt gesteuert werden. Durch die Lage und Geometrie des Wärmeträgerkanals 12 kann die Wärmeabgabe in Bezug auf die Leistung und auf die jeweiligen Bedürfnisse optimiert werden. Durch das Einbringen mehrerer Deckeleinrichtungen 48, die auch zur Luftumlenkung dienen, mit mindestens einem Gebläse 14 und den beschriebenen Luftumlenkungselementen 64, 66, 68, kann eine größtmögliche Wärmeübertragungsleistung und Variabilität in Abhängigkeit von einer oder zwei Grundlängen nur durch Beschneiden des Gehäuses 10 erreicht werden. Aufgrund der Integration des Wärmeträgerkanals 12 in das Gehäuse 10, wird das von Konvektoren bekannte knackende Geräusch vermieden, welches ansonsten durch unterschiedliche Längenausdehnungen von Wärmeträgerrohr, Lamellen und Gehäuseteilen entsteht.

Es kann weiterhin vorgesehen sein, durch die Integration von Längsnuten im Gehäuse unter Verwendung von Fügestiften aus bereits vorgefertigten Längen oder durch Beschnitt entstehenden Restlängen jede beliebige Rasterlänge zu erzeugen. Das Rastermaß hängt dabei nur von der Länge der Deckeleinrichtung 48 und der verwendeten Anzahl ab, dadurch ist es möglich, völlig abfallfrei Längenvarianten in einfacher Weise zu erzeugen.

Durch die Verwendung von zwei oder mehr längenunterschiedlichen Deckeleinrichtungen 48 können auch Bereiche mit höherer Leistungsabgabe erzeugt werden, um zum Beispiel schlechter isolierte Bereiche des Fahrzeugs mit örtlich mehr Leistung zu versorgen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Gehäuse
- 12: Wärmeträgerkanal
- 14: Gebläse
- 16: Lufteintrittskanal
- 18: Luftaustrittskanal
- 20: Wärmeübertragungsluftkanal
- 22: Wärmeübertragungsluftkanal
- 24: Luftdurchtritt
- 26: Luftdurchtritt
- 28: obere Gehäusewand
- 30: untere Gehäusewand
- 32: Segment
- 34: Segment
- 36: Segment
- 38: Segment
- 40: Segment
- 42: Segment
- 44: Lamellen
- 46: seitliche Gehäusewand
- 48: Deckeleinrichtung
- 50: Lufteintrittsöffnungen
- 52: Luftaustrittsöffnungen
- 54: Luftfiltermittel / Luftfilterborste
- 56: Wärmeträgereinlass
- 58: Wärmeträgerauslass
- 60: Wärmeträgerumlenkung
- 62: Lamellenbereich
- 64: zentrales Luftleitelement
- 66: oberes Luftleitelement
- 68: unteres Luftleitelement
- 70: Befestigungsmittel
- 72: Befestigungsmittel
- 74: Fahrzeugseitenwand
- 76: Fahrzeugboden
- 78: Luftabzweig
- 80: Kanal für Fügestift
- 82: Rippen
- 84: Rippen
- 86: Bodenabdichtung

## Patentansprüche

1. Wärmeübertragungseinrichtung für großvolumige Fahrzeuginnenräume, mit
- einem mit Luftkanälen ausgestatteten Gehäuse (10), wobei das Gehäuse (10) eine Längsabmessung hat, die wesentlich größer ist als seine Querabmessungen,
- mindestens einem Wärmeträgerkanal (12) zum Führen eines flüssigen Wärmeträgers, der sich im Wesentlichen in Längsrichtung des Gehäuses (10) erstreckt, und
- mindestens einem Gebläse (14) zum Ansaugen, zum Ausblasen und zum Fördern von Luft durch das Gehäuse (10),
**dadurch gekennzeichnet,**
- **dass** der Wärmeträgerkanal (12) in das Gehäuse (10) integriert ist,
- **dass** mindestens ein Lufteintrittskanal (16) vorgesehen ist,
- **dass** mindestens ein Luftaustrittskanal (18) vorgesehen ist,
- **dass** mindestens ein erster Wärmeübertragungsluftkanal (20) vorgesehen ist,
- **dass** mindestens ein zweiter Wärmeübertragungsluftkanal (22) vorgesehen ist,
- **dass** der mindestens eine Lufteintrittskanal (16) und der mindestens eine erste Wärmeübertragungsluftkanal (20) über mindestens einen ersten Luftdurchtritt (24) miteinander verbunden sind,
- **dass** der mindestens eine Luftaustrittskanal (18) und der mindestens eine zweite Wärmeübertragungsluftkanal (22) über mindestens einen zweiten Luftdurchtritt (26) miteinander verbunden sind,
- **dass** das mindestens eine Gebläse (14) und der mindestens eine erste
- Luftdurchtritt (24) an entgegengesetzten Endbereichen des ersten Wärmeübertragungsluftkanals (20) angeordnet sind und
- **dass** der mindestens eine zweite Luftdurchtritt (26) in der Nähe des mindestens einen Gebläses (14), jedoch ohne direkte Verbindung zu diesem angeordnet ist.

2. Wärmeübertragungseinrichtung nach Anspruch 1, **dadurch gekennzeichnet,**
- **dass** das Gehäuse (10) eine obere Gehäusewand (28) und eine untere Gehäusewand (30) aufweist,
- **dass** der Wärmeträgerkanal (12) in die obere Gehäusewand (28) und insbesondere auch in die untere Gehäusewand (30) integriert ist und
- **dass** die Wärmeübertragungsluftkanäle (20, 22) zwischen dem Lufteintrittskanal (16) beziehungsweise dem Luftaustrittskanal (18) und der oberen Gehäusewand (28) beziehungsweise der unteren Gehäusewand (30) angeordnet sind.

3. Wärmeübertragungseinrichtung nach Anspruch 1 oder 2,
**dadurch gekennzeichnet,**
- **dass** die Wärmeübertragungseinrichtung mehrere Segmente (32, 34, 36, 38, 40; 42) aufweist und
- **dass** jedes Segment (32, 34, 36, 38, 40, 42) einen Lufteintrittskanal (16), einen Luftaustrittskanal (18), zwei Wärmeübertragungsluftkanäle (20, 22), zwei Abschnitte des Wärmeträgerkanals (12) und ein Gebläse (14) aufweist.

4. Wärmeübertragungseinrichtung nach einem der vorangehenden Ansprüche, **dadurch gekennzeichnet, dass** zwischen den Wärmeübertragungsluftkanälen (20, 22) und dem Wärmeträgerkanal Lamellen (44) angeordnet sind.

5. Wärmeübertragungseinrichtung nach einem der vorangehenden Ansprüche, **dadurch gekennzeichnet,**
- **dass** das Gehäuse (10) eine seitliche Gehäusewand (46) aufweist,
- **dass** die der seitlichen Gehäusewand (46) gegenüberliegende Seite des Gehäuses (10) mit einer Deckeleinrichtung (48) versehen ist,
- **dass** die Deckeleinrichtung (48) in den Lufteintrittskanal (16) führende Lufteintrittsöffnungen (50) aufweist und
- **dass** die Deckeleinrichtung (48) aus dem Luftaustrittskanal (18) führende Luftaustrittsöffnungen (52) aufweist.

6. Wärmeübertragungseinrichtung nach Anspruch 5, **dadurch gekennzeichnet, dass** die seitliche Gehäusewand (46) eine Wärmtauscherfunktion hat, so dass außerhalb des Gehäuses (10) an der seitlichen Gehäusewand (46) vorbeiströmende Luft erwärmt beziehungsweise gekühlt und nach oben ausgeblasen werden kann.

7. Wärmeübertragungseinrichtung nach einem der vorangehenden Ansprüche, **dadurch gekennzeichnet, dass** der Lufteintrittskanal (16) oberhalb des Luftaustrittskanals (18) angeordnet ist.

8. Wärmeübertragungseinrichtung nach einem der vorangehenden Ansprüche, **dadurch gekennzeichnet, dass** in dem Lufteintrittskanal Luftfiltermittel (54) vorgesehen sind.

9. Verfahren zum Betreiben einer Wärmeübertragungseinrichtung nach einem der vorangehenden Ansprüche, bei dem zur Beeinflussung der Wärmebeziehungsweise Kälteleistung der Wärmeübertragungseinrichtung die Gebläsedrehzahl gesteuert beziehungsweise geregelt wird.

10. Verfahren nach Anspruch 9, bei dem zur Beeinflussung der Wärmebeziehungsweise Kälteleistung der Wärmeübertragungseinrichtung die Menge des zirkulierenden Wärmeträgers gesteuert beziehungsweise geregelt wird.

11. Verfahren nach Anspruch 9 oder 10, bei dem zur Beeinflussung der Wärme- beziehungsweise Kälteleistung der Wärmeübertragungseinrichtung die Temperatur des zirkulierenden Wärmeträgers gesteuert beziehungsweise geregelt wird.

## Claims

1. Heat transfer device for large-volume vehicle interiors, comprising
- a housing (10) equipped with air channels, the housing (10) having a longitudinal dimension which is substantially larger than its transverse dimensions,
- at least one heat carrier channel (12) for carrying a liquid heat carrier, which channel extends substantially in the longitudinal direction of the housing (10), and
- at least one fan (14) for taking in, for blowing out and for conveying air through the housing (10),
**characterized**
- **in that** the heat carrier channel (12) is integrated into the housing (10),
- **in that** at least one air inlet channel (16) is provided,
- **in that** at least one air outlet channel (18) is provided,
- **in that** at least one first heat transfer air channel (20) is provided,
- **in that** at least one second heat transfer air channel (22) is provided,
- **in that** the at least one air inlet channel (16) and the at least one first heat transfer air channel (20) are connected to each other via at least one first air passage (24),
- **in that** the at least one air outlet channel (18) and the at least one second heat transfer air channel (22) are connected to each other via at least one second air passage (26),
- **in that** the at least one fan (14) and the at least one first air passage (24) are arranged in opposite end regions of the first heat transfer air channel (20), and
- **in that** the at least one second air passage (26) is arranged in the vicinity of the at least one fan (14) but without any direct connection to the latter.

2. Heat transfer device according to Claim 1,
**characterized**
- **in that** the housing (10) has an upper housing wall (28) and a lower housing wall (30),
- **in that** the heat carrier channel (12) is integrated into the upper housing wall (28) and in particular also into the lower housing wall (30), and
- **in that** the heat transfer air channels (20, 22) are arranged between the air inlet channel (16) and, respectively, the air outlet channel (18) and the upper housing wall (28) and, respectively, the lower housing wall (30).

3. Heat transfer device according to Claim 1 or 2, **characterized**
- **in that** the heat transfer device has a plurality of segments (32, 34, 36, 38, 40, 42), and
- **in that** each segment (32, 34, 36, 38, 40, 42) has an air inlet channel (16), an air outlet channel (18), two heat transfer air channels (20, 22), two sections of the heat carrier channel (12) and a fan (14).

4. Heat transfer device according to one of the preceding claims, **characterized in that** slats (44) are arranged between the heat transfer air channels (20, 22) and the heat carrier channel.

5. Heat transfer device according to one of the preceding claims, **characterized**
- **in that** the housing (10) has a lateral housing wall (46),
- **in that** the side of the housing (10) opposite the lateral housing wall (46) is provided with a covering device (48),
- **in that** the covering device (48) has air inlet openings (50) leading into the air inlet channel (16), and
- **in that** the covering device (48) has air outlet openings (52) leading out of the air outlet channel (18).

6. Heat transfer device according to Claim 5, **characterized in that** the lateral housing wall (46) has a heat-exchanger function, so that air flowing past the lateral housing wall (46) outside the housing (10) can be heated or cooled and blown out upwards.

7. Heat transfer device according to one of the preceding claims, **characterized in that** the air inlet channel (16) is arranged above the air outlet channel (18).

8. Heat transfer device according to one of the preceding claims, **characterized in that** air filtering means (54) are provided in the air inlet channel.

9. Method of operating a heat transfer device according to one of the preceding claims, in which the rotational speed of the fan is controlled or regulated in order to influence the heat output or cooling output of the heat transfer device.

10. Method according to Claim 9, in which the quantity of the circulating heat carrier is controlled or regulated in order to influence the heat output or cooling output of the heat transfer device.

11. Method according to Claim 9 or 10, in which the temperature of the circulating heat carrier is controlled or regulated in order to influence the heat output or cooling output of the heat transfer device.

## Revendications

1. Dispositif de transfert de chaleur pour habitacles de grand volume, avec
- un boîtier (10) équipé de canaux d'air, sachant que le boîtier (10) possède une dimension longitudinale qui est nettement supérieure à ses dimensions transversales,
- au moins un canal caloporteur (12) pour diriger un caloporteur liquide, qui s'étend pour l'essentiel dans la direction longitudinale du boîtier (10), et
- au moins une soufflante (14) pour aspirer, expulser et véhiculer l'air à travers le boîtier (10),
**caractérisé**
- **en ce que** le canal caloporteur (12) est intégré dans le boîtier (10),
- **en ce qu'**il est prévu au moins un canal d'entrée d'air (16),
- **en ce qu'**il est prévu au moins un canal de sortie d'air (18),
- **en ce qu'**il est prévu au moins un premier canal d'air de transfert de chaleur (20),
- **en ce qu'**il est prévu au moins un deuxième canal d'air de transfert de chaleur (22),
- **en ce que** le canal d'entrée d'air (16) au moins unique et le premier canal d'air de transfert de chaleur (20) au moins unique sont mutuellement reliés par l'intermédiaire d'au moins un premier passage d'air (24),
- **en ce que** le canal de sortie d'air (18) au moins unique et le deuxième canal d'air de transfert de chaleur (22) au moins unique sont mutuellement reliés par l'intermédiaire d'au moins un deuxième passage d'air (26),
- **en ce que** la soufflante (14) au moins unique et le premier passage d'air (24) au moins unique sont disposés dans des régions terminales opposées du premier canal d'air de transfert de chaleur (20), et en ce que le deuxième passage d'air (26) au moins unique est disposé au voisinage de la soufflante (14) au moins unique, mais sans liaison directe avec celle-ci.

2. Dispositif de transfert de chaleur selon la revendication 1, **caractérisé**
- **en ce que** le boîtier (10) présente une paroi supérieure de boîtier (28) et une paroi inférieure de boîtier (30),
- **en ce que** le canal caloporteur (12) est intégré dans la paroi supérieure de boîtier (28) et en particulier également dans la paroi inférieure de boîtier (30), et
- **en ce que** les canaux d'air de transfert de chaleur (20, 22) sont disposés entre le canal d'entrée d'air (16) ou respectivement le canal de sortie d'air (18) et la paroi supérieure de boîtier (28) ou respectivement la paroi inférieure de boîtier (30).

3. Dispositif de transfert de chaleur selon la revendication 1 ou 2,
**caractérisé**
- **en ce que** le dispositif de transfert de chaleur présente plusieurs segments (32, 34, 36, 38, 40, 42), et
- **en ce que** chaque segment (32, 34, 36, 38, 40, 42) présente un canal d'entrée d'air (16), un canal de sortie d'air (18), deux canaux d'air de transfert de chaleur (20, 22), deux tronçons du canal caloporteur (12) et une soufflante (14).

4. Dispositif de transfert de chaleur selon l'une des revendications précédentes, **caractérisé en ce que** des lamelles (44) sont disposées entre les canaux d'air de transfert de chaleur (20, 22) et le canal caloporteur.

5. Dispositif de transfert de chaleur selon l'une des revendications précédentes, **caractérisé**
- **en ce que** le boîtier (10) présente une paroi latérale de boîtier (46),
- **en ce que** le côté du boîtier (10) qui est opposé à la paroi latérale de boîtier (46) est pourvu d'un élément formant couvercle (48),
- **en ce que** l'élément formant couvercle (48) présente des ouvertures d'entrée d'air (50) menant dans le canal d'entrée d'air (16), et
- **en ce que** l'élément formant couvercle (48) présente des ouvertures de sortie d'air (52) menant hors du canal de sortie d'air (18).

6. Dispositif de transfert de chaleur selon la revendication 5, **caractérisé en ce que** la paroi latérale de boîtier (46) exerce une fonction d'échangeur de chaleur, de sorte que de l'air s'écoulant en dehors du boîtier (10) le long de la paroi latérale de boîtier (46) peut être réchauffé ou refroidi et expulsé vers le haut.

7. Dispositif de transfert de chaleur selon l'une des revendications précédentes, **caractérisé en ce que** le canal d'entrée d'air (16) est disposé au-dessus du canal de sortie d'air (18).

8. Dispositif de transfert de chaleur selon l'une des revendications précédentes, **caractérisé en ce que** des moyens formant filtre à air (54) sont prévus dans le canal d'entrée d'air.

9. Procédé d'exploitation d'un dispositif de transfert de chaleur selon l'une des revendications précédentes, selon lequel, pour agir sur la puissance calorifique ou frigorifique du dispositif de transfert de chaleur, on commande ou régule la vitesse de rotation de la soufflante.

10. Procédé selon la revendication 9, selon lequel, pour agir sur la puissance calorifique ou frigorifique du dispositif de transfert de chaleur, on commande ou régule la quantité de caloporteur en circulation.

11. Procédé selon la revendication 9 ou 10, selon lequel, pour agir sur la puissance calorifique ou frigorifique du dispositif de transfert de chaleur, on commande ou régule la température du caloporteur en circulation.
